# EUROPÄISCHE PATENTSCHRIFT

(11) **EP 1 957 684 B1**
(45) Veröffentlichungstag und Bekanntmachung des Hinweises auf die Patenterteilung: **08.12.2010**
(21) Anmeldenummer: 06791958.9
(22) Anmeldetag: 07.09.2006
(51) Int. Cl.: C22B 34/24, H01G 9/052, B22F 9/24

(54) **REDUKTIONSVERFAHREN**
REDUCTION METHOD
PROCEDE DE REDUCTION

(30) Priorität: 16.09.2005 DE 102005044280
(43) Veröffentlichungstag der Anmeldung: 20.08.2008
(60) Teilanmeldung: 09175881.3
(73) Patentinhaber: H.C. Starck GmbH, 38642 Goslar (DE)
(72) Erfinder: LÖFFELHOLZ, Josua, 38685 Langelsheim (DE); HILPERT, Jürgen, 3821 Denkte (DE)
(86) Internationale Anmeldenummer: PCT/EP2006/008809
(87) Internationale Veröffentlichungsnummer: WO 2007/031246

(56) Entgegenhaltungen:
- US-A- 4 684 399
- US-A- 5 442 978

## Beschreibung

Die Erfindung betrifft ein Verfahren zur Herstellung von Ventilmetall-Elektrolytkondensatorpulver, insbesondere Tantal durch Na-Reduktion in einer Rührkesselkaskade sowie ein Verfahren zu dessen Herstellung.

Ventilmetalle, worunter insbesondere Tantal und dessen Legierungen, sowie andere Metalle der Gruppe IVB (Ti, Zr, Hf) Vb (V, Nb, Ta), und Vlb (Cr, Mo, W) des Periodensystems der Elemente sowie deren Legierungen zu verstehen sind, finden bei der Bauteilherstellung vielfältige Verwendung. Besonders hervorzuheben ist der Einsatz von Niob, und Tantal zur Herstellung von Kondensatoren. Bei der Herstellung von Niob, oder Tantalkondensatoren geht man üblicherweise von entsprechenden Metallpulvern aus, welche zunächst verpreßt und anschließend gesintert werden, um einen porösen Körper zu erhalten. Dieser wird in einem geeigneten Elektrolyten anodisiert, wobei sich ein dielektrischer Oxidfilm auf dem Sinterkörper ausbildet. Die physikalischen und chemischen Eigenschaften der eingesetzten Metallpulver haben einen entscheidenden Einfluß auf die Eigenschaften des Kondensators. Entscheidende Charakteristika sind beispielsweise die spezifische Oberfläche und der Gehalt an Verunreinigungen.

Tantalpulver einer Qualität, die den Einsatz Herstellung von Kondensatoren erlaubt, wird üblicherweise durch Natriumreduktion von K2TaF7 hergestellt. Dabei wird K2TaF7 in einer Retorte vorgelegt und durch flüssiges Natrium reduziert. Dabei entsteht ein hochporöses Agglomerat aus Primärkörnern. Der Kontrolle der Korngröße sowohl des Agglomerats als auch des Primärkoms sowie der Porosität kommt bei dieser Reaktion eine besondere Bedeutung zu. Die Korngröße des Primärkorns Ist proportional zur spezifischen Oberfläche und damit proportional zur spezifischen Kapazität des später daraus hergestellten Kondensators. Besonders entscheidend ist dabei eine möglichst gleiche Korngröße jedes einzelnen Korns, da es für jede Formierspannung eine optimale Korngröße des Primärkoms gibt, welches die höchste spezifische Kapazität ergibt. Die Kornform, Korngröße und Porosität des Agglomerats bestimmt die späteren Verarbeitungseigenschaften wie Fließfähigkeit und imprägnierbarkeit sowie die sich daraus ableitenden elektrischen Eigenschaften wie Elektrischen Serienwiderstand (ESR) und Impedanz (ESL). Daraus kann man ableiten, daß für jede Anwendung gekennzeichnet durch gewünschtes Kapazitätsniveau und Anwendungsspannung sowie Anodengröße ein Korn mit optimaler Primär- und Agglomeratkorngröße die besten Ergebnisse bringt.

Aus US-A 5 442 978 ist bekannt, daß die Kornfeinheit durch Reaktionstemperatur, Überschuß an Reduktionsmittel sowie Verdünnungsverhältnis von K2TaF7 in der Salzschmelze beeinflußt werden kann. US-A 5 442 978 schlägt daher vor, zur Herstellung von Tantalpulver mit hoher spezifischer Oberfläche hoch verdünntes K2TaF7 durch schrittweise Zugabe von Natrium herzustellen, wobei die Zugabe mit einer hohen Rate erfolgt. Bei dieser Umsetzung treten im Verlauf ungleichmäßige Konzentrationsverhältnisse auf, so daß die Korngrößenverteilung des entstehenden Pulvers sehr breit ist.

Gemäß US A-4 684 399 ist es vorteilhaft, die Tantalverbindung während der Reaktion kontinuierlich oder schrittweise zuzugeben. Durch diese Maßnahme bleibt die Konzentration während es Reduktionsprozesses gleichförmig.

In DE 33 30 455 A1 wird ein Dotierungsmittel der Reaktion zugesetzt, mit dem Ziel feinere Körnung zu erhalten. Dies erlaubt die weitgehende Kontrolle des Primärkorns, jedoch nicht die Kontrolle des Agglomeratkoms, da diese auf Grund des Batchprozesses eine für Rührkessel typische breite Verteilung der Agglomeratkorngröße ergibt. In der technischen Praxis wird dieses Korn daher zunachst weiter thermisch agglomeriert und durch mechanische Verfahren (Mahlen, fraktioniertes Sieben, Sichten) aufwendig in die gewünschte Korngrößenverteilung gebracht. In CN 1443618 ist ein Verfahren beschrieben, welches ebenfalls zu gleichförmigen Tantalpulvern kommt, die jedoch verfahrensgemäß mit Magnesium >20 ppm verunreinigt sind. Höhere Magnesiumverunreinigungen können sich jedoch auf die späteren elektrischen Eigenschaften des Pulvers negativ auswirken, besonders auf den Reststrom.

Aufgabe der vorliegenden Erfindung ist es, ein Ta-Pulver mit gleichförmiger Agglomerat- und Prmärkorngröße herzustellen, welches Mg Verunreinigungen <20 ppm, bevorzugt < 10 ppm, optimierte spezifische Kapazitätswerte bei gegebener Formierspannung und einen Formfaktor nahe 1 aufweist. Die Aufgabe bestand außerdem, ein Verfahren zur Herstellung von Ventilmetallpulvem zur Verfügung zu stellen. Eine weitere Aufgabe bestand in der Bereitstellung eines Verfahrens, welches kontinuierlich durchgeführt werden kann, eine gute Kontrolle der Reaktionsbedingungen während der verschiedenen Reaktionsabschnitte ermöglicht und eine Herstellung von Ventilmetallpulvern, die eine enge Partikelgrößenverteilung innerhalb eines gewünschten Partikelgrößenbereichs aufweisen.

Diese Aufgabe wird gelöst durch ein Verfahren zur Herstellung eines Ventilmetalles, umfassend
- das Schmelzen eines Gemisches, das einen Ventilmetall-Precursor und Verdünnungsmittel enthält, in einem ersten Gefäß;
- das Übertragen des Gemisches in mindestens ein zweites Gefäß, um es bei den gleichen oder verschiedenen Bedingungen von Temperatur und Verweilzeit zu mischen, bei welchen die Reaktion des Ventilmetall-Precursors zu einem Ventilmetall initiiert wird.

Das Verhältnis von Verdünnungssalz zu Ventilmetall-Precursor ist in der Regel größer als 1:5, meist größer als 1:20.

Temperatur und Verweilzeit im zweiten Gefäß können unabhängig voneinander unterschiedlich oder gleich den jeweiligen Bedingungen im ersten Gefäß sein.

Das Gemisch aus dem Ventilmetall-Precursor und dem Verdünnungsmittel wird in dem ersten Gefäß gemischt und aufgeschmolzen. Dabei wird die das Gemisch im Allgemeinen gerührt oder auf eine andere Weise bewegt, so dass das Gemisch homogenisiert wird. Das Gemisch wird dann in ein zweites Gefäß überführt, in welchem die Reaktion des Ventilmetall-Precursors zu einem Ventilmetall initiiert wird. Dabei herrscht im zweiten Gefäß eine gleiche oder von der Temperatur im ersten Gefäß verschiedene Temperatur. Auch die Verweilzeit kann mit der Verweilzeit des Gemisches im ersten Gefäß gleich oder verschieden sein.

Die Gesamtmenge an eingesetztem Reduktionsmittel beträgt meist das 0,9 bis 1,5-fache, oder aber das 1 bis 1,05-fache der stöchiometrisch benötigten Menge zur vollständigen Reduktion des Ventilmetallprecursors.

In einer weiteren Ausführungsform der Erfindung umfasst das Verfahren gemäß der Erfindung darüber hinaus das Übertragen des Gemisches in mindestens ein drittes Gefäß und Mischen bei denselben oder bei verschiedenen Bedingungen von Temperatur und Verweilzeit, um die weitere Reaktion des Ventilmetall-Precursors zu einem Ventilmetall fortzusetzen.

In einer weiteren Ausführungsform der Erfindung umfasst das Verfahren gemäß der Erfindung darüber hinaus das Übertragen des Gemisches in mindestens ein viertes Gefäß und Mischen bei denselben oder bei verschiedenen Bedingungen von Temperatur und Verweilzeit, um die weitere Reaktion des Ventilmetall-Precursors zu einem Ventilmetall fortzusetzen.

Das Übertragen des Gemisches kann auf beliebige Weise erfolgen. Da das Verfahren kontinuierlich durchgeführt werden kann, folgt eine zwangsläufige Übertragung des Gemisches von einem Gefäß in das nächste, wenn im ersten Gefäß kontinuierlich neues Gemisch geschmolzen und homogenisiert wird. Durch einen Überlauf kann dann das Gemisch von einem Gefäß in das folgende Gefäß übertragen werden. Die Verweilzeit für die Reaktionen lässt sich somit durch die Geschwindigkeit kontrollieren, mit der Gemische in die Gefäße eingeleitet und aus diesen übertragen werden. In einer weiteren Ausführungsform der Erfindung kann durch die Verwendung eines absenkbaren Verdrängungskörpers in den jeweiligen Gefäßen die Verweilzeit kontrolliert oder das Gemisch auch schubweise in den nächsten Kessel überführt werden.

Die Kontrolle der Verweilzeit beeinflusst die Größe, Dichte, Oberfläche und die Schüttdichte der Partikel. Die Temperatur kann diese Produkteigenschaften ebenfalls beeinflussen; höherer Temperaturen tragen zwar einerseits zu einer Beschleunigung der Reaktion und somit zu einer Erzeugung feinerer Partikel bei, andererseits führen höhere Temperaturen auch zu einer Verklumpung (Agglomeration) der Partikel und somit gröberer Partikel mit einer niedrigeren Oberfläche. Unter der Verweilzeit versteht man den Zeitraum, in dem eine Reaktion oder Reaktionen stattfinden. Die totale oder Gesamtverweilzeit des Verfahrens ist die Summe der Verweilzeit in jedem Reaktionsgefäß. Die minimale Verweilzeit für das Verfahren ist eine Verweilzeit, die zum Ausfällen eines Ventilmetalles ausreicht. Die maximale Verweilzeit des Verfahrens ist im Allgemeinen durch das gewünschte Produkt und die Verfahrensökonomie vorgegeben. Für gegebene Reaktionsbedingungen und eine gegebene Temperatur sind im Allgemeinen kürzere Gesamtverweilzeiten erwünscht zum Herstellen kleiner Partikelgrößen, und längere Verweilzeiten sind erwünscht zur Herstellung hoher Partikelgrößen. Es ist meist vorteilhaft wenn die Gesamtverweilzeit die kürzeste Zeit ist, die im Wesentlichen eine vollständige Umwandlung des Ventilmetall-Precursors in das gewünschte Ventilmetall erlaubt.

Die Verweilzeiten liegen im Allgemeinen bei 5 bis 30 Minuten pro Gefäß. Die Gesamtverweilzeit liegt in der Regel zwischen 10 Minuten und 4 Stunden, insbesondere 20 bis 120 Minuten.

Als Gefäß im Sinne der Erfindung lassen sich vorteilhaft Reaktoren verwenden, die einen Zu- und Abfluß von Stoffen, eine Regelung der Temperatur durch Erwärmung oder Abkühlung sowie das Rühren des Reaktorinhaltes gestatten. Hierbei haben sich kontinuierliche Tankreaktoren mit Rührwerk bewährt, beispielsweise Kaskaden-Absaugrohr-Reaktorsysteme, in welchen die Temperaturen und Verweilzeiten im Wesentlichen gleich oder verschieden sein und unabhängig voneinander kontrolliert werden können. Die Temperatur der Gefäße kann durch herkömmliche Mittel wie Heiz- oder Kühlmäntel oder Heiz- bzw. Kühlschlangen bewirkt werden. Diese Gefäße und sonstige verwendete Vorrichtungen sind kommerziell bekannt und werden hier nicht im Detail beschrieben. Darüber hinaus ist das Verfahren gemäß der Erfindung nicht auf die Durchführung in einer speziellen Anlage beschränkt und kann mittels eines breiten Spektrums verschiedener Anlagen durchgeführt werden, die zum Durchführen der beschriebenen Verfahrensschritte geeignet sind.

Obwohl weiter oben ein erstes bis viertes Gefäß beschrieben sind, können weitere Gefäße zur Kontrolle des Verfahrens eingesetzt werden. So können beispielsweise das zweite und dritte Gefäß durch je zwei Gefäße bei gleichen oder nur geringfügig unterschiedlichen Bedingungen ersetzt werden, wodurch die Gesamtzahl der Gefäße auf sechs ansteigt. Vorteilhaft für eine gute Kontrolle der Reaktionsbedingungen sind kleine Gefäßvolumina, beispielsweise im Bereich vom 10 bis 60 Liter, insbesondere 20 bis 50 Liter. Vorteilhaft ist hier die durch das geringe Volumen deutlich verbesserte Temperaturkontrolle der stark exothermen Reaktion im Reaktor. Dadurch können die Reaktionen isotherm gefahren und starke Übertemperaturen wie bei größeren Batchreaktoren üblich vermieden werden. Das vergleichsweise geringe Volumen und damit der vermeintlich geringere Materialdurchsatz im Vergleich zu Batchreaktoren kann durch die Möglichkeit des kontinuierlichen Betriebs ausgeglichen werden. Da die Verweilzeit bei konstantem Zufluß von Reaktionsgemisch durch kleine Gefäßvolumina ansteigt und durch große Gefäßvolumina abnimmt, lässt sich auch durch die Wahl der Gefäßvolumina die Verweilzeit variieren. Wenn beispielsweise in einer Kaskade von Gefäßen gleichen Volumens ein Gefäß mit einem anderen Volumen eingesetzt wird, so unterscheidet sich die Verweilzeit in diesem Gefäß zwangsläufig von den übrigen Verweilzeiten, wenn nicht durch geeignete Maßnahmen gegengesteuert wird.

Während der Reaktion kann zu einem oder mehreren der Gefäße frischer Ventilmetall-Precursor, Reduktionsmittel oder Dotiermittel entweder alleine oder im Gemisch mit Verdünnungsmittel zugegeben werden.

In einer weiteren Ausführungsform der Erfindung umfasst das Verfahren gemäß der Erfindung darüber hinaus die zusätzliche Zugabe von Ventilmetall-Precursor, Verdünnungsmittel oder einer Mischung daraus zu dem zweiten Gefäß oder zu dem dritten Gefäß oder zu beiden.

In einer weiteren Ausführungsform der Erfindung umfasst das Verfahren gemäß der Erfindung die zusätzliche Zugabe eines Reduktionsmittels, eines Verdünnungsmittels oder einer Mischung daraus zu dem zweiten Gefäß oder zu dem dritten Gefäß oder zu beiden.

In einer weiteren Ausführungsform der Erfindung umfasst das Verfahren gemäß der Erfindung die zusätzliche Zugabe eines Dotiermittels zu einem oder mehreren der verwendeten Gefäße, insbesondere mindestens zu dem ersten und/oder zweiten und/oder dritten Gefäß zugegeben. Meist ist eine Zugabe zum ersten Gefäß ausreichend. Durch Zugabe des Dotierungsmittels kann das Kornwachstum gezielt initiiert werden, wobei je nach Beschaffenheit des gewünschten Produktes eine Zugabe zu einem oder mehreren der Gefäße vorteilhaft sein kann.

Das Dotiermittel kann im ersten Gefäß mit eingearbeitet werden. Im letzten Gefäß der Reaktorkaskade erfolgt vorteilhaft keine Zugabe von Dotier- oder Reduktionsmittel mehr und es wird lediglich zur Vervollständigung der Reaktion nachgerührt.

In der Regel ist es jedoch ausreichend, wenn Reduktionsmittel mindestens im zweiten Gefäß zugegeben wird. Die Zugabe des Reaktionsmittels kann kontinuierlich oder portionsweise erfolgen und je nach gewünschter Reaktionstemperatur erfolgen. Meist erlaubt die portionsweise Zugabe eine verbesserte Kontrolle der Temperatur, da die Reaktion stark exotherm ist. Die Menge des zugegebenen Reduktionsmittels - unabhängig davon ob eine kontinuierliche oder portionsweise Zugabe erfolgt- wird durch die Grenzen der Wärmeabfuhr festgelegt. Bei zu rascher Zugabe kann die Temperatur des Gemisches sich so stark erhöhen, dass das Reduktionsmittel verdampft, was zu vermeiden ist. Die Temperaturen in den Gefäßen liegen im Allgemeinen bei 800 bis 1050°C, insbesondere bei 850 bis 1050°C oder bei 870 bis 930 °C. Die Temperaturen in Gefäßen, in denen keine Zugabe von Reduktionsmittel erfolgt, liegen in der Regel niedriger bei 800 bis 900°C.

Das Verfahren gemäß der Erfindung findet unter Intergasatmosphäre statt. Dabei sind insbesondere Edelgase, wie Helium, Neon oder Argon, besonders geeignet. Es lassen sich jedoch auch andere Gase einsetzen, die nicht mit den Edukten oder Produkten des Verfahrens reagieren. Stickstoff ist einerseits zwar weniger bevorzugt, kann aber verwendet werden, wenn die Ausbildung einer Nitridphase oder die Anwesenheit von Stickstoff in Form einer festen Lösung in dem Ventilmetall erwünscht ist. In letzterem Fall wird der Stickstoff vorzugsweise durch ein Zuleitungsrohr direkt in das Reaktionsgemisch eingeleitet, so dass das Gas das Reaktionsgemisch soweit sättigen kann wie erforderlich und der Stickstoff von dem Reaktionsprodukt wie gewünscht aufgenommen wird. In diesem Fall wird etwa die drei- bis zwanzigfache Menge des Stickstoffs eingeleitet, der der im Ventilmetall (insbesondere Tantal oder Niob) gewünschten Menge entspricht. Beim Einsatz eines größeren Überschusses an Stickstoff entstehen kristalline Nitridphasen, die meist nicht gewünscht sind. Diese Verfahrensvariante ist bei der Herstellung von Niob oder Tantal für Kondensatoranwendungen vorteilhaft, insbesondere bei Niob.

Das Gemisch wird aus dem letzten Behälter vorzugsweise kontinuierlich entnommen und wie bekannt aufgearbeitet. Dabei wird das Gemisch unter Inertgas, meist Stickstoff oder Argon abgelassen und abgekühlt, wobei eine Temperatur von 100°C oder weniger als geeignet angesehen wird. Das Gemisch wird dann mit Luft oder Dampf passiviert, wobei Reste des Reduktionsmittels zersetzt werden und anschließend zerkleinert. Anschließend wird mit Wasser oder einer Säure ausgelaugt und gewaschen, um Reste von Verdünnungsmittel, Dotiermittel und Reduktionsmittel zu entfernen und das erhaltene Ventilmetallpulver getrocknet.

Auch eine anschließende Hochtemperaturbehandlung ist möglich, um die Sinterbrücken zwischen den Primärkömern zu stabilisieren, zu verdicken und zu homogenisieren oder eine Vergröberung zu bewirken.

Anschließend kann das Ventilmetallpulver einer Desoxidation mit Magnesium oder einem anderen Reduktionsmittel wie Calcium, Barium, Cer oder Lanthan unterworfen werden. Hierzu wird das Ventilmetallpulver mit Calcium, Barium, Cer oder Lanthan intensiv vermischt und in einer Inertgasatmosphäre, insbesondere Argon, auf eine Temperatur oberhalb der Schmelztemperatur des Reduktionsmittels erhitzt.

Das Verfahren gemäß der Erfindung ist insbesondere zur Herstellung von Niob- und Tantalmetallpulvern geeignet. Diese Pulver sind für Kondensatoranwendungen gut geeignet, ebenso wie für die Verwendung bzw. Verarbeiten durch Kaltgasspritzen.

Ventilmetalle gemäß der Erfindung sind Metalle der Gruppen IVB, Vb und Vlb des Periodensystems der Elemente, oder Ti, Zr, Hf, V, Nb, Ta, Cr, Mo, W sowie deren Legierungen, oder Tantal oder Niob.

Ein Reduktionsmittel im Sinne der vorliegenden Erfindung sind alle Stoffe, die unter den Reaktionsbedingungen des Verfahrens gemäß der Erfindung eine Reduktion des Ventilmetall-Precursors zum elementaren Ventilmetall bewirken können. Dies sind im Allgemeinen Alkali- oder Erdalkalimetalle und deren Legierungen, namentlich Lithium, Natrium, Kalium, Rubidium, Cäsium, Beryllium, Magnesium, Calcium, Strontium und Barium; oder Alkalimetalle und deren Legierungen; oder Natrium, Kalium, Calcium sowie deren Legierungen; oder das Reduktionsmittel enthält Lanthan, Yttrium oder Cer; oder das >Reduktionsmittel ist ein als Mischmetall bezeichnetes, nicht aufgereinigtes Gemisch aus diversen Seltenredmetallen; oder das Reduktionsmittel enthält mindestens ein Alkalimetall; oder Natrium oder Kalium; oder das Reduktionsmittel ist Natrium.

Ein Ventilmetall-Precursor gemäß der Erfindung ist ein Stoff, der unter dem Einfluß des Reduktionsmittels zu dem gewünschten Ventilmetall umgesetzt werden kann. Dies sind daher Ventilmetallverbindungen, wie Ventilmetallchloride, beispielsweise Niobpentachlorid, Tantalpentachlorid, Niobsubchlorid, Tantalsubchlorid sowie die entsprechenden Iodide oder Bromide; insbesondere die komplexen Halogenide der Ventilmetalle, insbesondere Alkali-Halogenometallate der Ventilmetalle wie Natrium- oder Kaliumheptafluorotantalat oder Natrium- oder Kaliumheptafluoroniobat oder Natrium- oder Kaliumheptachlorotantalat oder Natrium- oder Kaliumheptachloroniobat, Oxide und Hydride von Tantal und Niob wie Tantalhydrid, Niobhydrid, Tantalpentoxid, Niobpentoxid, Tantaldioxid, Niobdioxid, Niobmonoxid, Tantalmonoxid, oder Mischungen enthaltend die vorgenannten Ventilmetall-Precursor.

Verdünnungsmittel gemäß der Erfindung sind Stoffe, die als Reaktionsmedium dienen, jedoch nicht selbst an der Reaktion beteiligt sind und bei den Reaktionsbedingungen flüssig sind. Dies sind meist Alkali- oder Erdalkalisalze, insbesondere Alkali- und/oder Erdalkalihalogenide, namentlich Lithiumchlorid, Lithiumbromid, Lithiumfluorid, Lithiumiodid, Natriumchlorid, Natriumbromid, Natriumfluorid, Natriumiodid, Kaliumchlorid, Kaliumbromid, Kaliumfluorid, Kaliumiodid, Kaliumchlorid, Magnesiumchlorid, Magnesiumbromid, Magnesiumfluorid, Magnesiumiodid, Calciumchlorid, Calciumbromid, Calciumfluorid, Calciumiodid oder deren Mischungen; oder Natriumchlorid, Natriumbromid, Natriumfluorid, Kaliumchlorid, Kaliumbromid, Kaliumfluorid, oder Natriumchlorid, Kaliumchlorid, Kaliumfluorid oder jeweils Mischungen der vorgenannten Salze.

Dotiermittel gemäß der Erfindung sind Alkalisalze mit schwefelhaltigen Anionen, Nitride, elementarer Schwefel, Alkalimetallphosphate, Alkalimetallborate oder Borverbindungen, insbesondere Alkalimetallsulfide, -sulfite und -sulfate, Ammoniumsalze, Nitrate, Nitrite, Ammoniumsulfid, Ammoniumsulfit, Ammoniumsulfat, Ammoniumnitrat, Ammoniumnitrit oder Natriumsulfid, Natriumsulfit, Natriumsulfat, Natriumnitrat, Natriumnitrit, Kaliumsulfid, Kaliumsulfit, Kaliumsulfat, Kaliumnitrat, Kaliumnitrit, Natriumphosphat, Kaliumphosphat, Kaliumborat, Natriumborat, Natriumborfluorid, Kaliumborfluorid, Bornitrid oder deren Mischungen; oder Natriumsulfat, Kaliumsulfat oder deren Mischungen.

Eine Ausgestaltung der Erfindung umfasst ein Verfahren zur Herstellung eines Ventilmetalles, umfassend
- das Schmelzen eines Gemisches, das einen Ventilmetall-Precursor und Verdünnungsmittel enthält, in einem ersten Gefäß;
- das Übertragen des Gemisches in mindestens ein zweites Gefäß, um es bei den gleichen oder verschiedenen Bedingungen von Temperatur und Verweilzeit zu mischen, bei welchen die Reaktion des Ventilmetall-Precursors zu einem Ventilmetall initiiert wird;
- das Übertragen des Gemisches in mindestens ein drittes Gefäß und Mischen bei denselben oder bei verschiedenen Bedingungen von Temperatur und Verweilzeit, um die weitere Reaktion des Ventilmetall-Precursors zu einem Ventilmetall fortzusetzen;
- das Übertragen des Gemisches in mindestens ein viertes Gefäß und Mischen bei denselben oder bei verschiedenen Bedingungen von Temperatur und Verweilzeit, um die weitere Reaktion des Ventilmetall-Precursors zu einem Ventilmetall fortzusetzen.

Eine weitere Ausgestaltung der Erfindung umfasst ein Verfahren zur Herstellung eines Ventilmetalles, umfassend
- das Schmelzen eines Gemisches, das einen Ventilmetall-Precursor und Verdünnungsmittel enthält, in einem ersten Gefäß bei einer ersten Temperatur und einer ersten Verweilzeit, wobei ein erstes Gemisch erhalten wird;
- das Übertragen des ersten Gemisches in mindestens ein zweites Gefäß, um es einer zweiten Temperatur und einer zweiten Verweilzeit zu mischen, bei welchen die Reaktion des Ventilmetall-Precursors zu einem Ventilmetall initiiert und ein zweites Gemisch erhalten wird;
- das Übertragen des zweiten Gemisches in mindestens ein drittes Gefäß und Mischen bei einer dritten Temperatur und einer dritten Verweilzeit, um die weitere Reaktion des Ventilmetall-Precursors zu einem Ventilmetall fortzusetzen, wobei ein drittes Gemisch erhalten wird;
- das Übertragen des dritten Gemisches in mindestens ein viertes Gefäß und Mischen bei einer Temperatur und einer vierten Verweilzeit, um die weitere Reaktion des Ventilmetall-Precursors zu einem Ventilmetall fortzusetzen.

Eine weitere Ausgestaltung der Erfindung umfasst ein Verfahren zur Herstellung eines Ventilmetalles, umfassend
- das Schmelzen eines Gemisches, das einen Ventilmetall-Precursor und Verdünnungsmittel enthält, in einem ersten Gefäß bei einer ersten Temperatur und einer ersten Verweilzeit, wobei ein erstes Gemisch erhalten wird;
- das Übertragen des ersten Gemisches in mindestens ein zweites Gefäß, um es einer zweiten Temperatur und einer zweiten Verweilzeit zu mischen, bei welchen die Reaktion des Ventilmetall-Precursors zu einem Ventilmetall initiiert und ein zweites Gemisch erhalten wird;
- das Übertragen des zweiten Gemisches in mindestens ein drittes Gefäß und Mischen bei einer dritten Temperatur und einer dritten Verweilzeit, um die weitere Reaktion des Ventilmetall-Precursors zu einem Ventilmetall fortzusetzen, wobei ein drittes Gemisch erhalten wird;
- das Übertragen des dritten Gemisches in mindestens ein viertes Gefäß und Mischen bei einer Temperatur und einer vierten Verweilzeit, um die weitere Reaktion des Ventilmetall-Precursors zu einem Ventilmetall fortzusetzen, wobei dem zweiten und dritten Gefäß Reduktionsmittel zugesetzt wird.

Eine weitere Ausgestaltung der Erfindung umfasst ein Verfahren zur Herstellung eines Ventilmetalles, umfassend
- das Schmelzen eines Gemisches, das einen Ventilmetall-Precursor und Verdünnungsmittel enthält, in einem ersten Gefäß bei einer ersten Temperatur und einer ersten Verweilzeit, wobei ein erstes Gemisch erhalten wird;
- das Übertragen des ersten Gemisches in mindestens ein zweites Gefäß, um es bei einer zweiten Temperatur und einer zweiten Verweilzeit zu mischen, bei welchen die Reaktion des Ventilmetall-Precursors zu einem Ventilmetall initiiert und ein zweites Gemisch erhalten wird;
- das Übertragen des zweiten Gemisches in mindestens ein drittes Gefäß und Mischen bei einer dritten Temperatur und einer dritten Verweilzeit, um die weitere Reaktion des Ventilmetall-Precursors zu einem Ventilmetall fortzusetzen; wobei ein drittes Gemisch erhalten wird;
- das Übertragen des dritten Gemisches in mindestens ein viertes Gefäß und Mischen bei einer vierten Temperatur und einer vierten Verweilzeit, um die weitere Reaktion des Ventilmetall-Precursors zu einem Ventilmetall fortzusetzen, wobei dem ersten Gefäß Dotiermittel und dem zweiten und dritten Gefäß Reduktionsmittel zugesetzt wird.

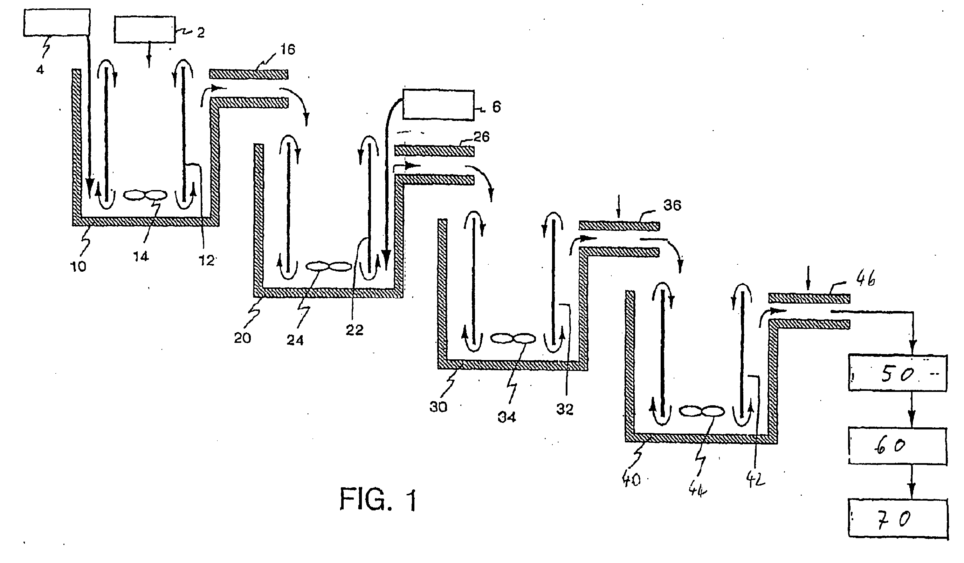

Figur 1 illustriert schematisch ein Reaktorsystem zur Durchführung des Verfahrens gemäß der Erfindung. Auch wenn in diesem Schema die Gefäße offen erscheinen, so soll hier auf die erforderliche Ausführung des Verfahrens gemäß der Erfindung unter einer Inertgasatmosphäre hingewiesen werden. In Figur 1 ist das Schema eines Kaskadenreaktorsystems gezeigt, in welchem das Verfahren gemäß der Erfindung vorteilhaft durchgeführt werden kann und welches eine Reihe von Reaktionsgefäßen mit Absaugrohren und Zirkulationsvorrichtungen (Rührvorrichtungen) umfasst. Derartige Reaktionsgefäße, Absaugrohre und Zirkulationsvorrichtungen, die zur Verwendung in dem Verfahren gemäß der Erfindung geeignet sind, sind kommerziell bekannt und werden daher hier nicht im Detail beschrieben. Das Verfahren ist nicht auf die Ausführung in einer bestimmten Anlage beschränkt und kann mittels eines breiten Spektrums verschiedener Anlagen durchgeführt werden.

In einem vorteilhaften Verfahren gemäß der Erfindung wird ein Ventilmetall-Precursor 2 oben in der Mitte des ersten Reaktionsgefäßes 10 zugegeben. Vorteilhaft wird zur selben Zeit das Verdünnungsmittel 4 zugegeben. In einer besonders vorteilhaften Ausführung der Erfindung werden Verdünnungsmittel und Ventilmetall-Precursor zunächst gemeinsam gemischt und das Gemisch zugegeben.

Die Zugabe von Ventilmetall-Precursor 2 und Verdünnungsmittel 4 findet außerhalb des durch das Absaugrohr oder Strombrecher 12 definierten Bereiches statt. Die Geschwindigkeit der Zugabe hängt ab von der gewünschten Verweilzeit für die in dem Gefäß stattfindenden Reaktionen, der Größe des ersten Reaktionsgefäßes und von der Geschwindigkeit, bei der das erste Gemisch aus dem Gefäß überführt wird. Darüber hinaus hängt die Geschwindigkeit der Zugabe zum Teil von der gewünschten Partikelgröße des Endproduktes ab, die Primärkorngröße beträgt meist 0,1-1µm, die Agglomeratkorngröße 30-300 µm. Das erste Reaktionsgefäß 10 wird bei einer ersten Temperatur (T1) gehalten, die zum Teil durch die verwendeten Edukte, zum Teil durch die gewünschte Partikelgröße des Endproduktes bestimmt wird. Im Allgemeinen liegt T1 im Bereich von 800 bis 1050°C, insbesondere bei 850 bis 1050°C oder bei 800 bis 900 °C oder 870 bis 930°C. Wärmeübertragungsmittel (z.B. ein Heizmantel, der das Gefäß umgibt oder Heizschlangen oder -platten, die in Fig. 1 nicht gezeigt sind) können verwendet werden, um die Reaktionsgefäße 10, 20, 30 und 40 bei den gewünschten Temperaturen zu halten. Die Zirkulationsvorrichtung 14, beispielsweise ein Rührer oder eine Pumpe, wird dazu verwendet, den Ventilmetall-Precursor 2 und das Verdünnungsmittel 4 innerhalb des Reaktionsgefäßes umzuwälzen und zu mischen, um ein erstes Gemisch zu erhalten. Die Fließrichtung des ersten Gemisches in dem ersten Reaktionsgefäß kann wie durch Pfeile angegeben verlaufen.

Während der Umwälzung tritt ein Teil des ersten Gemisches des ersten Reaktionsgefäßes 10 durch die Leitung 16. Die Verweilzeit für die Reaktion, die in dem ersten Reaktionsgefäß stattfindet, R1, kann durch Variieren der Durchsatzrate und/oder der Reaktorgröße und/oder durch die Verwendung eines absenkbaren Verdrängungskörpers in den jeweiligen Gefäßen die Verweilzeit kontrolliert werden. Durch die Verwendung eines absenkbaren Verdrängungskörpers in den jeweiligen Gefäßen kann das Gemisch auch schubweise in den nächsten Kessel überführt werden. Die Verweilzeit bestimmt zum Teil die Größe, Dichte, Oberfläche und die Schüttdichte der Partikel. Für bestimmte Reaktorgrößen kann R1 im Bereich von 20 bis 120 Minuten, meist jedoch im Bereich von 5 bis 30 Minuten liegen. Für eine gegebene Verweilzeit R1 und eine gegebene Temperatur T1 führen höhere Werte für R1 zu einem Endprodukt, dessen Primärpulver eine um 1-4 g/inch³ höhere Schüttdichte im Bereich von 12-20 g/inch³ aufweist.

Der Teil des ersten Gemisches, der das erste Reaktionsgefäß 10 durch die Leitung 16 verlässt, wird in die innere Peripherie eines zweiten Reaktionsgefäßes 20 in den Bereich eingeführt, der durch das Absaugrohr 22 definiert ist. Die Zugabegeschwindigkeit des ersten Gemisches in das zweite Reaktorgefäß 20 hängt ab von der Geschwindigkeit, mit der das erste Gemisch von dem ersten Reaktionsgefäß 10 übertragen wird. Das Reduktionsmittel 6 wird an der äußeren Peripherie und nahe dem Boden des zweiten Reaktionsgefäßes 20 außerhalb des durch das Saugrohr 22 definierten Bereichs zugegeben. Die Zugabegeschwindigkeit des Reduktionsmittels 6 hängt ab von der Größe des zweiten Reaktionsgefäßes, der gewünschten Verweilzeit für die in dem zweiten Reaktionsgefäß stattfindenden Reaktionen und der Geschwindigkeit, bei der das erste Gemisch in das zweite Reaktionsgefäß überführt wird. Darüber hinaus hängt die Additionsgeschwindigkeit des Reduktionsmittels 6 auch von der gewünschten Temperatur T2 des zweiten Gemischs ab, die zum Teil die gewünschte Partikelgröße des Endprodukts bestimmt. Im Allgemeinen liegt T2 im Bereich von 800 bis 1050°C, insbesondere bei 850 bis 1050°C oder bei 870 bis 930 °C.

Das zweite Reaktionsgefäß 20 wird bei einer zweiten Temperatur T2 gehalten, die zum Teil bestimmt wird durch die gewünschte Dichte der Partikel in dem Endprodukt, die gewünschte Größe der Partikel in dem Endprodukt und die Reaktionsgeschwindigkeit. Im Allgemeinen liegt T2 in einem Bereich von 800°C bis 1050°C, jedoch immer so niedrig, dass das Reduktionsmittel nicht in nennenswertem Umfang verdampft. Für eine gegebene Temperatur und eine Verweilzeit führt ein höherer Wert für T2 zu einem Endprodukt mit einer erhöhten, gröberen Partikelgröße. Die Umwälzvorrichtung 24 wird verwendet, um das Gemisch, das in das zweite Reaktionsgefäß eintritt und das Reduktionsmittel 6 in dem Reaktionsgefäß 10 umzuwälzen und zu mischen, wobei ein zweites Gemisch gebildet wird. Die Fließrichtung des zweiten Gemischs in dem zweiten Reaktionsgefäß ist durch die Pfeile angegeben. Eine Umkehr der Fließrichtung kann je nach den gewünschten Produkten Partikeleigenschaften beeinflussen.

Während der Umwälzung tritt ein Teil des zweiten Gemischs durch die Leitung 26 aus dem zweiten Reaktionsgefäß aus. Die Verweilzeit R2 für die in dem zweiten Reaktionsgefäß stattfindende Reaktion, kann durch Variieren der Umwälzgeschwindigkeit und/oder der Reaktorgröße und/oder durch die Verwendung eines absenkbaren Verdrängungskörpers kontrolliert werden und bestimmt zum Teil die Vervollständigung der Reaktion in dem zweiten Gefäß. Die Verweilzeit bestimmt zum Teil die Größe, Dichte, Oberfläche und die Schüttdichte der Partikel. Bis zu einem gewissen Grad erlaubt sie ein Ausfällen und Verdichten der aus dem Reaktionsprodukt, dem gewünschten Refraktärmetall, bestehenden Partikel. Durch Variieren von R2 können somit Produkte verschiedener Partikelgrößen, Dichten, Oberflächen und die Schüttdichten der Partikel erzeugt werden. R2 kann im Bereich von 2 bis 90 Minuten liegen. Für eine gegebene T2 ergibt ein höherer Wert für R2 ein Endprodukt, das dichtere und gröbere Partikel aufweist.

Der Teil des zweiten Gemischs, der aus dem zweiten Reaktionsgefäß 20 durch die Leitung 26 austritt, wird in die innere Peripherie eines dritten Reaktionsgefäßes 30 innerhalb des durch das Absaugrohr 32 definierten Bereiches eingeleitet. Die Zugabegeschwindigkeit des zweiten Gemischs in das dritte Reaktionsgefäß 30 hängt ab von der Geschwindigkeit, bei der das zweite Gemisch aus dem zweiten Reaktionsgefäß 20 überführt wird.

Die Umwälzvorrichtung 34 wird dazu verwendet, das zweite Gemisch in dem dritten Reaktionsgefäß umzuwälzen und weiterhin zu mischen, um eine im Wesentlichen vollständige Ausfällung des Refraktärmetalles zu ermöglichen. Die Fließrichtung des zweiten Gemischs in dem dritten Reaktionsgefäß ist durch die Pfeile angegeben, ist jedoch keine begrenzende Eigenschaft der Reaktion. In Fällen, in denen kein zusätzliches Reduktionsmittel, Verdünnungsmittel, Ventilmetall-Precursor oder Dotiermittel zu dem dritten Reaktionsgefäß zugegeben wird, ist die Temperatur des Gemischs in dem dritten Reaktionsgefäß, T3, im Allgemeinen geringfügig kleiner als T2, je nach dem Grad der Vollständigkeit der Reaktion in dem dritten Reaktionsgefäß, sowie der Zugabegeschwindigkeit des zweiten Gemischs in das dritte Reaktionsgefäß 30.

Das dritte Reaktionsgefäß 30 wird bei einer Temperatur T3 gehalten, die zum Teil durch den Grad der gewünschten Vervollständigung der Reaktion in dem Gefäß bestimmt wird. Im Allgemeinen liegt T3 in einem Bereich von 800 bis 1050°C, oder bei 850 bis 1050°C oder 870 bis 930 °C, insbesondere bei 880 bis 920 °C; wird im dritten Reaktionsgefäß kein zusätzliches Reduktionsmittel zugegeben liegt T3 insbesondere bei 800 bis 900 °C. Für eine gegebene Verweilzeit führt ein höherer Wert für T3 zu einer im Wesentlichen vollständigen Endproduktereaktion.

Während der Umwälzung tritt ein Teil des Gemischs durch eine Ausgangsleitung 36 aus dem dritten Reaktionsgefäß aus. Die Verweilzeit für die Reaktionen, die in dem dritten Reaktionsgefäß stattfinden, können durch Variieren der Umwälzgeschwindigkeit und der Größe des Reaktionsgefäßes kontrolliert werden. Die Verweilzeit des Gemisches in dem dritten Reaktionsgefäß, R3, bestimmt zum Teil die Vervollständigung der Reaktion zum Endprodukt. R3 kann im Bereich von 20 bis 120 Minuten, insbesondere 5 bis 30 Minuten liegen. Für eine gegebene Temperatur T3 führen höhere Werte für R3 zu einem Endprodukt, das dichtere, gröbere Partikel aufweist.

Während der Umwälzung tritt ein Teil des dritten Gemischs durch die Leitung 36 aus dem zweiten Reaktionsgefäß aus.

Der Teil des dritten Gemischs, der aus dem dritten Reaktionsgefäß 30 durch die Leitung 36 austritt, wird in die innere Peripherie eines vierten Reaktionsgefäßes 40 innerhalb des durch das Absaugrohr 42 definierten Bereiches eingeleitet. Die Zugabegeschwindigkeit des dritten Gemischs in das vierte Reaktionsgefäß 40 hängt ab von der Geschwindigkeit, bei der das dritte Gemisch aus dem dritten Reaktionsgefäß 30 überführt wird.

Die Umwälzvorrichtung 44 wird dazu verwendet, das dritte Gemisch in dem vierten Reaktionsgefäß umzuwälzen und weiterhin zu mischen, um eine Vervollständigung der Ausfällung des Refraktärmetalles zu ermöglichen. Die Fließrichtung des dritten Gemischs in dem vierten Reaktionsgefäß ist durch die Pfeile angegeben, ist jedoch keine begrenzende Eigenschaft der Reaktion. Es wird hierbei in der Regel kein zusätzliches Reduktionsmittel, Verdünnungsmittel, Ventilmetall-Precursor oder Dotiermittel zu dem vierten Reaktionsgefäß zugegeben. Die Temperatur des Gemischs in dem vierten Reaktionsgefäß, T4, ist im Allgemeinen geringfügig kleiner als T3, je nach dem Grad der Vollständigkeit der Reaktion in dem vierten Reaktionsgefäß, sowie der Zugabegeschwindigkeit des dritten Gemischs in das vierte Reaktionsgefäß 40.

Das vierte Reaktionsgefäß 40 wird bei einer Temperatur T4 gehalten, die zum Teil durch den Grad der Vervollständigung der Reaktion in dem vorhergehenden Gefäß bestimmt wird. Im Allgemeinen liegt T4 in einem Bereich von 800 bis 1050°C, oder bei 850 bis 1050°C oder insbesondere bei 800 bis 900 °C.

Während der Umwälzung tritt ein Teil des Gemischs durch eine Ausgangsleitung 46 aus dem vierten Reaktionsgefäß aus. Die Verweilzeit für die Reaktionen, die in dem vierten Reaktionsgefäß stattfinden, können durch Variieren der Umwälzgeschwindigkeit und der Größe des Reaktionsgefäßes kontrolliert werden. Die Verweilzeit des Gemisches in dem vierten Reaktionsgefäß, R4, bestimmt zum Teil die Vervollständigung der Reaktion zum Endprodukt. R4 kann im Bereich von 20 bis 120 Minuten, insbesondere 5 bis 30 Minuten liegen. Für eine gegebene Temperatur T4 führen höhere Werte für R3 zu einem Endprodukt, das dichtere, gröbere Partikel aufweist.

Die Lösung, die durch die Austrittsleitung 46 aus dem vierten Reaktionsgefäß 40 austritt, läuft zu einer herkömmlichen Verarbeitungsanlage, in der das Gemisch in einem Schritt 50 auf eine Temperatur von weniger als 100°C abgekühlt wird, wobei sich das Gemisch verfestigt, und durch kontrollierte Luftzugabe passiviert wird. Dabei kann die Luft mit Wasserdampf angereichert oder durch Wasserdampf ersetzt werden. Anschließend wird das erstarte, passivierte Gemisch in Schritt 50 zerkleinert. Das ausgefallene, feste Ventilmetall wird aus dem Gemisch durch einen Schritt 60 abgetrennt, in dem die wasserlöslichen Anteile in demineralisiertem Wasser gelöst wird, welches eine Säure enthalten kann, allfällige Reste des Reduktionsmittels in einer sauren Lösung, beispielsweise durch wasserstoffperoxidhaltige Schwefelsäure, aufgelöst werden und nach dem Waschen das Ventilmetall durch einen Flüssigkeit/Feststoff-Abtrennschritt gewonnen werden. Der Flüssigkeit/Feststoff-Abtrennschritt kann auf jede in der Technik bekannte Art durchgeführt werden, beispielsweise durch Filtrieren oder Zentrifugieren. Vorzugsweise wird der Flüssigkeit/Feststoff-Abtrennschritt durch ein Vakuum- oder Druckfilter durchgeführt.

Nach dem Waschen werden die Feststoffe getrocknet, wie durch den Trocknungsschritt 70 angegeben ist. Das erhaltene Produkt ist ein Ventilmetallpulver, das eine enge Partikelgrößenverteilung, eine gewünschte Partikelgröße sowie eine gewünschte Spherizität aufweist. Optional kann der Verfahrensschritt 70 auch eine Phosphordotierung beinhalten. Dabei wird der Phosphorgehalt des VentilmetallPulvers eingestellt, indem das Ventilmetall beispielsweise mit einer Ammoniumhydrogenphosphatlösung ((NH₄)H₂PO₄-Lösung) behandelt und anschließend getrocknet wird. Das so erhaltene Ventilmetall kann dann weiteren Verfahrensschritten unterworfen werden.

Beispielsweise kann eine Hochtemperaturbehandlung, ein Desoxidationsschritt oder eine Kombination daraus angeschlossen werden.

Obwohl die Zugabe von Materialien und Reagenzien unter Bezugnahme auf besondere Teile der Reaktionsgefäße beschrieben worden ist, können die Materialien und Reagenzien zu alternativen Teilen der Reaktionsgefäße zugegeben werden, um Endprodukte mit verschiedenen Eigenschaften zu erzeugen. Beispielsweise kann in dem ersten Reaktionsgefäß der Ventilmetall-Precursor 2 zu der äußeren Periphere des Gefäßes zugegeben werden und das Verdünnungsmittel 4 in der Mitte des Gefäßes zugegeben werden; oder aber Ventilmetall-Precursor und Verdünnungsmittel werden außerhalb des ersten Gefäßes gemischt und dann zugefügt; oder es wird zusätzlich zum Ventilmetall-Precursor 2 und dem Verdünnungsmittel 4 ein Dotiermittel zugegeben; oder aber Ventilmetall-Precursor und Verdünnungsmittel und Dotiermittel werden außerhalb des ersten Gefäßes gemischt und dann zugefügt. Es ist darüber hinaus offensichtlich, dass obwohl bei der vorherigen Ausführungsform 4 Reaktionsgefäße verwendet werden, das erfindungsgemäße Verfahren mit einer geringeren oder größeren Anzahl von Reaktionsgefäßen durchgeführt werden kann, je nach den gewünschten Eigenschaften des Endprodukts und der gewünschten Prozeßführung.

Das Ventilmetall-Pulver kann dadurch hergestellt werden, daß K₂TaF₇ mit Natrium kontinuierlich in einer Rührkesselkaskade, bevorzugt 2-4 stufig, hergestellt wird. Dabei ist in einer bevorzugten Ausführungsform die Rührkesselkaskade ohne Ventile, welche die flüssige Schmelze benetzen ausgeführt. Die Dosierung des K₂TaF₇ kann in fester oder flüssiger Form erfolgen. Das Aufschmelzen des K₂TaF₇ erfolgt im ersten Reaktor. Bei einer Ausführung der Dosierung in flüssiger Form wird in den ersten Reaktor nur K₂TaF₇ und gegebenenfalls Verdünnungssalze wie KCl, KF oder NaCl sowie Dotiermittel wie Natrium- oder Kaliumsulfat gegeben. Durch die Verwendung eines absenkbaren Verdrängungskörpers im ersten Kessel kann die Schmelze auch schubweise in den nächsten Kessel überführt werden. In den weiteren Rührkesseln wird Natrium so dosiert, daß die Reaktion in einem engen Temperaturfenster abläuft. Dabei wird Natrium bevorzugt schußweise dosiert, die Gesamt-Natriummenge beträgt 0.95-1.06-faches stöchiometrisches Verhältnis zum K₂TaF₇, die Schußgröße liegt bei 1 kg bis 10 kg, insbesondere bei 2 kg bis 5 kg Natrium. Die Reaktionstemperaturen liegen zwischen 850-1050 °C, bevorzugt bei 880-950 °C oder 880-950 °C. Die während der exothermen Reaktion entstehende Wärme wird über die Wandung abgeführt. Diese wird mit Luft oder über Wärmetauscher gekühlt. In der letzten Kaskade wird die Reaktion zum Abschluß nachgerührt. Die Steuerung der Reaktion kann über Dosiergeschwindigkeit von K₂TₐF₇, Na, Verdünnungssalz und Dotiermittel erfolgen. Die Exothermie der Reaktion ist durch die relativ geringen Ausmaße der Reaktoren besonders gut beherrschbar, durch die Intensität der Kühlung kann die Verweilzeit auch bei gegebenen festen Reaktormaßen variiert werden. Die mittleren Verweilzeiten liegen zwischen 10 min-4h, bevorzugt zwischen 20-120 min. In einer bevorzugten Ausführungsform wird die Rührkesselkaskade so ausgeführt, daß die einzelnen Kessel über Überläufe fest miteinander verbunden sind. Das Produkt wird kontinuierlich abgezogen. In einer bevorzugten Ausführungsform wird die Schmelze unter Argon in einen konischen Wechselbehälter abgelassen. Anschließend wird das Reaktionsgut auf <100 °C abgekühlt, mit Luft oder Dampf passiviert und über einen Brecher zerkleinert. Die weitere Aufarbeitung des Reaktionsprodukts erfolgt in bekannter Weise. Es wird in Wasser unter Zugabe von Säure ausgelaugt und gewaschen um Verdünnungssalze und Reste NaOH und Dotiermittel zu entfernen und das erhaltene Tantalpulver getrocknet. Wahlweise kann hier ein Schritt der Phosphordotierung eingefügt werden, bei dem das Tantalmetallpulver mit einer (NH₄)H₂PO₄-Lösung behandelt wird, um den P-Gehalt im fertigen Tantalmetallpulver einzustellen. Anschließend wird das Pulver einer Hochtemperaturbehandlung im Vakuum ausgesetzt. Beispielsweise wird 30 Minuten auf 1250 °C bis 1500 °C, bevorzugt auf 1280 °C bis 1450 °C, besonders bevorzugt auf 1280 °C bis 1360 °C erhitzt oder 1000 °C, bei Pulvern mit BET-Oberflächen von mehr als 3 m²/g vorteilhaft bei Temperaturen zwischen 1000 bis 1200°C. Das so hergestellte Tantalpulver wird dann einer Desoxidation mit Magnesium oder anderen Reduktionsmitteln (Ca, Ba, Ce, La) unterworfen. Dazu wird das pulverförmige Reduktionsmittel mit dem Ta-Pulver vermischt und bei Temperaturen zwischen 700-1100 °C für 1-10 h unter Schutzgas (Argon) oder Vakuum behandelt, wodurch eine Gasphasendesoxidation des Refraktärmetalls erreicht wird. Auch eine Gasdesoxidation mit gasförmigem Magnesium kann alternativ dazu durchgeführt werden. Anschließend wird das Pulver abgekühlt, mit Luft passiviert und mit verdünnter Säure (Schwefelsäure oder Salpetersäure) gewaschen und anschließend getrocknet.

### Beispiele

Soweit nicht anders angegeben, handelt es sich bei den Prozentangaben um Gewichtsprozent (Gew.-%).

Die Kapazität des Ventilmetallpulvers wird nach folgendem Vorgehen bestimmt: Aus jeweils 0,296 g eines desoxidierten Ventilmetallpulvers werden zylinderförmige Presskörper der Abmessung 4,1 mm Durchmesser und 4,26 mm Länge mit einer Pressdichte von 4,8 g/cm³ hergestellt, wobei in der Pressmatritze vor dem Einfüllen der Ventilmetallpulver axial ein Tantaldraht von 0,2 mm Durchmesser als Kontaktdraht eingelegt wurde. Die Presskörper werden bei einer Sintertemperatur von 1330 °C bis 1430 °C über 10 Minuten im Hochvakuum (< 10⁻⁵ mbar) zu Anoden versintert. Die Anodenkörper werden in 0,1 Gew.-%-ige Phosphorsäure eingetaucht und bei einer auf 150 mA begrenzten Stromstärke bis zu einer Formierspannung von 30 V formiert. Nach Abfallen der Stromstärke wird die Spannung noch 100 Minuten aufrecht erhalten. Zur Messung der Kondensatoreigenschaften wird ein Elektrolyt aus 18 Gew.-%-iger Schwefelsäure eingesetzt. Es wird mit einer Frequenz von 120 Hz gemessen. Anschließend wird der Reststrom in Phosphorsäure der Leitfähigkeit 4300 µS gemessen. Die erhaltenen Werte der Kapazität der Einzelanode und des Reststroms der Einzelanode werden auf µFV/g mit µF = Kapazität, V = Formierspannung, g = Anodenmasse bzw. µA/g mit µA = gemessener Reststrom und g = eingesetzte Anodenmasse oder µA/µFV normiert.

Die folgenden Beispiele dienen der näheren Erläuterung der Erfindung, wobei die Beispiele das Verständnis des erfindungsgemäßen Prinzips erleichtern sollen, und nicht als Einschränkung desselben zu verstehen sind.

### Beispiel 1 (Vergleichsbeispiel)

Ein Tantal-Primärpulver wurde ausgehend von einer Mischung aus 150 kg K₂TaF₇, 136 kg KCl, 150 kg KF, 4 kg eines hochfeinen Tantalpulvers und 300 g Na₂SO₄ in einer Nickel beschichteten INCONEL-Retorte durch inkrementweise Zugabe von Natrium bei einer Reduktionstemperatur von 900 °C analog US-A 5 442 978 hergestellt. Das Tantalpulver wurde aus der erkalteten und zerkleinerten Reaktionsmischung durch Waschung mit schwach angesäuertem Wasser isoliert, wobei abschließend noch eine reinigende Behandlung mit einer Waschlösung durchgeführt wurde, die Schwefelsäure und Wasserstoffperoxid enthielt. Das Material wurde mit einer Natriumdihydrogenphosphatlösung, die 1 mg P pro ml Lösung enthält, auf 20 ppm Phosphor dotiert. Nach dem Trocknen wurde eine Temperaturbehandlung im Hochvakuum bei 1430 °C durchgeführt. Im Anschluss daran wurde mittels der Natriumdihydrogenphosphatlösung (1mg P pro ml) der

Phosphorgehalt des Tantalpulvers auf 60 ppm eingestellt. Das Pulver weist folgende Verunreinigungen (in ppm) auf:
Mg: < 1 ppm
Na: 0,7 ppm
K: 7 ppm

2 kg des Ausgangspulvers aus Beispiel 1 wurden mit 50 g Magnesiumspänen (2,5 Gew.-%) vermischt und in einem abgedeckten Tantaltiegel in einer Retorte unter Argonatmosphäre für 3 h auf 980 °C gebracht. Nach Abkühlen und kontrollierter Lufteinspeisung zur Passivierung wird das Reaktionsgut entnommen und gebildetetes Magnesiumoxid mit einer Waschlösung aus verdünnter Schwefelsäure und Wasserstoffperoxidlösung entfernt. Die Waschlösung wird abdekantiert und das Pulver auf der Nutsche mit entmineralisiertem Wasser säurefrei gewaschen. Das getrocknete Pulver weist einen Sauerstoffgehalt von 2781 ppm auf.

1,8 kg dieses Pulvers werden nun einem zweiten Desoxidationsschritt unterzogen. Dazu werden 11,4 g Magnesiumspänen (bezogen auf den Sauerstoffgehalt die 1,5-fach stöchiometrische Menge) unter das Pulver gemischt und diese Mischung ebenfalls für 3 h auf 980 °C erhitzt. Nach dem Abkühlen und Passivieren wird erneut das gebildete MgO durch eine Säurewäsche entfernt, und das Pulver säurefrei gewaschen.

Das so hergestellte Pulver weist die folgenden Verunreinigungen auf:
Mg: 8 ppm
Na: 1 ppm
K: 6 ppm

Der elektrische Test ergab eine Kapazität von 38261 CV/g bei einer Sintertemperatur von 1400 °C.

### B1. Erhaltene Ventilmetallpulver - Vergleichsbeispiele

| Nr. | Ventilmetall | T2 °C | Inert-gas | Kap. kCV/ g | BET m²/g | Mg < ppm | Na < ppm | K pp m | N2 ppm | O2 ppm |
|---|---|---|---|---|---|---|---|---|---|---|
| 1 | Ta | 980 | Ar | 53 | 0,9 | 20 | 3 | 10 | 500 | 3100 |
| 2 | Ta | 980 | Ar | 89 | 2,09 | 25 | 0,5 | 0,5 | 1304 | 6290 |
| 3 | Ta | 980 | Ar | 63 | 1,22 | 25 | 0,5 | 0,5 | 1100 | 5500 |
| 4 | Ta | 1020 | Ar | 70 | 1,43 | 25 | 1 | 1 | 700 | 3700 |
| 5 | Ta | 930 | Ar | 91 | 2,11 | 25 | 0,5 | 0,5 | 1240 | 6450 |
| 6 | Ta | 950 | Ar | 153 | 3,23 | 30 | 1 | 1 | 1700 | 7858 |
| 7 | Ta | 980 | Ar | 150 | 3,01 | 30 | 1 | 1 | 1300 | 8148 |
| 8 | Ta | 980 | Ar | 200 | 4,45 | 70 | 1 | 1 | 1500 | 11877 |

### Beispiel 2

Ein Gemisch aus 150 kg Kaliumhexafluorosalz des Ventilmetalles wird mit 150 kg Kaliumchlorid, 150 kg Kaliumfluorid und Kaliumsulfat vermischt und in das erste Reaktionsgefäß kontinuierlich eindosiert. Dort wird das Gemisch auf 900°C erhitzt und nach dem Aufschmelzen in ein zweites Gefäß überführt. Dort wird kontinuierlich die Gesamtmenge von 50 kg Natrium unter Temperaturkontrolle derart zudosiert, dass die Temperatur 1050°C nicht übersteigt und in ein drittes Gefäß überführt. Dort wird bei einer Temperatur von 880 °C nachgerührt und das Reaktionsgemisch durch einen Überlauf in ein viertes Gefäß überführt. Wenn die Temperatur im dritten Gefäß 900°C übersteigt, so wird durch Absenken eines Verdrängungskörpers ein Drittel des Reaktionsgemisches in das vierte Gefäß und das Volumen solange verringert belassen, bis die Temperatur wieder auf 880°C abgesunken ist. Im vierten Gefäß wird die Temperatur auf 880°C reguliert, weiter nachgerührt und kontinuierlich entnommen. Die Reaktion wurde unter Inertgas durchgeführt. Das Reaktionsgemisch wird nach der Reaktion abgekühlt und zerkleinert. Das Tantalpulver wird aus der erkalteten und zerkleinerten Reaktionsmischung durch Waschung mit schwach angesäuertem Wasser isoliert, wobei abschließend noch mit einer Waschlösung, die Schwefelsäure und Wasserstoffperoxid enthält, nachgewaschen wird. Das Material wird mit einer Natriumdihydrogenphosphatlösung, die 1 mg Phosphor pro ml Lösung enthält, auf 20 ppm Phosphor dotiert. Nach dem Trocknen wird eine Temperaturbehandlung im Hochvakuum bei 1430°C durchgeführt. Im Anschluss daran wurde mittels der Natriumdihydrogenphosphatlösung (1mg Phosphor pro ml) der Phosphorgehalt des Tantalpulvers auf 60 ppm eingestellt. Die Pulver weisen folgende Verunreinigungen (in ppm) auf:
Mg: < 1 ppm
Na: 0,7 - 0,8 ppm
K: 3 - 5 ppm

Das erhaltene Pulver wird anschließend wie in Beispiel 1 desoxidiert. Abweichend von Beispiel 1 verwendete Desoxidationsmittels sowie die erhaltenen Pulver sind in Tabelle B2 aufgeführt:

### B2. Erhaltene Ventilmetallpulver

| Nr. | Ventil metall | T2 °C | Inert-gas | Desoxmittel | Kap. kCV/ g | Mg < ppm | Na< ppm | K ppm | f | N2 ppm |
|---|---|---|---|---|---|---|---|---|---|---|
| 1 | Ta | 950 | Ar | Ca | 122 | 1 | 1 | 1 | 0,86 | 170 |
| 2 | Ta | 980 | Ar | Ca | 163 | 1 | 1 | 1 | 0,88 | 159 |
| 3 | Ta | 1000 | Ar | Ca | 83 | 1 | 1 | 1 | 0,89 | 163 |
| 4 | Ta | 1020 | Ar | Ca | 78 | 1 | 1 | 1 | 0,89 | 181 |
| 5 | Ta | 930 | Ar | Ca | 156 | 1 | 1 | 1 | 0,82 | 175 |
| 6 | Ta | 950 | Ar | Ce | 177 | 1 | 1 | 1 | 0,84 | 165 |
| 7 | Ta | 980 | Ar | Ce | 165 | 1 | 1 | 1 | 0,88 | 178 |
| 8 | Ta | 1000 | Ar | La | 180 | 1 | 1 | 1 | 0,90 | 166 |
| 9 | Ta | 1020 | Ar | La | 203 | 1 | 1 | 1 | 0,89 | 197 |
| 10 | Ta | 930 | Ar | La | 309 | 1 | 1 | 1 | 0,80 | 194 |
| 11 | Ta | 950 | N2 | La | 280 | 1 | 1 | 1 | 0,83 | 2200 |
| 12 | Ta | 980 | N2 | La | 210 | 1 | 1 | 1 | 0,86 | 2900 |
| 13 | Ta | 950 | N2 | Ca | 278 | 1 | 1 | 1 | 0,88 | 2250 |
| 14 | Ta | 980 | N2 | Ca | 223 | 1 | 1 | 1 | 0,90 | 2940 |
| 15 | Ta | 1000 | N2 | Ca | 178 | 1 | 1 | 1 | 0,90 | 4200 |
| 16 | Nb | 930 | Ar | Ca | | 1 | 1 | 1 | 0,84 | 172 |
| 17 | Nb | 950 | Ar | Ca | | 1 | 1 | 1 | 0,85 | 193 |
| 18 | Nb | 980 | Ar | Ca | | 1 | 1 | 1 | 0,89 | 182 |
| 19 | Nb | 1000 | Ar | Ca | | 1 | 1 | 1 | 0,90 | 177 |
| 20 | Nb | 1020 | Ar | Ca | | 1 | 1 | 1 | 0,89 | 194 |
| 21 | Nb | 930 | Ar | La | | 1 | 1 | 1 | 0,80 | 186 |
| 22 | Nb | 950 | Ar | La | | 1 | 1 | 1 | 0,83 | 169 |
| 23 | Nb | 980 | Ar | La | | 1 | 1 | 1 | 0,84 | 170 |
| 24 | Nb | 1000 | Ar | La | | 1 | 1 | 1 | 0,85 | 174 |
| 25 | Nb | 1020 | Ar | La | | 1 | 1 | 1 | 0,87 | 171 |
| 26 | Nb | 930 | N2 | Ca | | 1 | 1 | 1 | 0,81 | 2900 |
| 27 | Nb | 950 | N2 | Ca | | 1 | 1 | 1 | 0,86 | 4200 |
| 28 | Nb | 980 | N2 | Ca | | 1 | 1 | 1 | 0,84 | 5100 |
| 29 | Nb | 1000 | N2 | Ca | | 1 | 1 | 1 | 0,90 | 6300 |
| 30 | Nb | 1020 | N2 | Ca | | 1 | 1 | 1 | 0,88 | 6600 |
| 31 | Nb | 980 | N2 | Ce | | 1 | 1 | 1 | 0,86 | 4900 |

## Patentansprüche

1. Verfahren zur Herstellung eines Ventilmetalles ausgewählt aus der Gruppe der Metalle Ti, Zr, Hf, V, Nb, Ta, Cr, Mo, W sowie deren Legierungen, umfassend das Schmelzen eines Gemisches, das einen Ventilmetall-Precursor und Verdünnungsmittel enthält, in einem ersten Gefäß; das Übertragen des Gemisches in mindestens ein zweites Gefäß, um es bei den gleichen oder verschiedenen Bedingungen von Temperatur und Verweilzeit zu mischen, bei welchen die Reaktion des Ventilmetall-Precursors zu einem Ventilmetall initiiert wird.

2. Verfahren nach Anspruch 1, darüber hinaus umfassend das Übertragen des Gemisches in mindestens ein drittes Gefäß und Mischen bei denselben oder bei verschiedenen Bedingungen von Temperatur und Verweilzeit, um die weitere Reaktion des Ventilmetall-Precursors zu einem Ventilmetall fortzusetzen.

3. Verfahren nach Anspruch 1 oder 2, darüber hinaus umfassend das Übertragen des Gemisches in mindestens ein viertes Gefäß und Mischen bei denselben oder bei verschiedenen Bedingungen von Temperatur und Verweilzeit, um die weitere Reaktion des Ventilmetall-Precursors zu einem Ventilmetall fortzusetzen.

4. Verfahren nach einem oder mehreren der Ansprüche 1 bis 3, wobei zusätzlich Ventilmetall-Precursor, Verdünnungsmittel oder eine Mischung daraus zu dem zweiten Gefäß oder zu dem dritten Gefäß oder zu beiden zugegeben wird.

5. Verfahren nach einem oder mehreren der Ansprüche 1 bis 4, wobei zusätzlich ein Reduktionsmittel, Verdünnungsmittel oder eine Mischung daraus zu dem zweiten Gefäß oder zu dem dritten Gefäß oder zu beiden zugegeben wird.

6. Verfahren nach einem oder mehreren der Ansprüche 1 bis 4, wobei zusätzlich ein Dotiermittel mindestens zu dem ersten und/oder zweiten und/oder dritten Gefäß zugegeben wird.

7. Verfahren nach einem oder mehreren der vorstehenden Ansprüche, wobei der Reduktionsmittel mindestens ein Alkalimetall, insbesondere Natrium, enthält.

8. Verfahren nach einem oder mehreren der vorstehenden Ansprüche, wobei der Ventilmetall-Precursor Kaliumheptafluorotantalat oder Kaliumheptafluoroniobat enthält.

9. Verfahren nach einem oder mehreren der vorstehenden Ansprüche, wobei das Verdünnungsmittel Alkalihalogenide, Kaliumchlorid, Kaliumfluorid, Natriumchlorid, ein superkritisches Fluid oder deren Mischungen enthält.

10. Verfahren nach einem oder mehreren der vorstehenden Ansprüche, wobei das Dotiermittel Alkalimetallsulfide, -sulfone, -sulfate, Natriumsulfat, Kaliumsulfat oder deren Mischungen enthält.

## Claims

1. Process for producing a valve metal selected from the group of metals Ti, Zr, Hf, V, Nb, Ta, Cr, Mo, W and their alloys, which comprises melting of a mixture containing a valve metal precursor and diluent in a first vessel; transfer of the mixture into at least one second vessel in order to mix it under the same or different conditions of temperature and residence time under which the reaction of the valve metal precursor to form a valve metal is initiated.

2. Process according to Claim 1, which further comprises transfer of the mixture to at least one third vessel and mixing under the same or different conditions of temperature and residence time in order to continue the further reaction of the valve metal precursor to form a valve metal.

3. Process according to Claim 1 or 2, which further comprises transfer of the mixture into at least one fourth vessel and mixing under the same or different conditions of temperature and residence time in order to continue the further reaction of the valve metal precursor to form a valve metal.

4. Process according to one or more of Claims 1 to 3, wherein a valve metal precursor, diluent or a mixture thereof is additionally introduced into the second vessel or into the third vessel or into both.

5. Process according to one or more of Claims 1 to 4, wherein a reducing agent, diluent or a mixture thereof is additionally introduced into the second vessel or into the third vessel or into both.

6. Process according to one or more of Claims 1 to 4, wherein a dopant is additionally introduced at least into the first and/or second and/or third vessel.

7. Process according to one or more of the preceding claims, wherein the reducing agent contains at least one alkali metal, in particular sodium.

8. Process according to one or more of the preceding claims, wherein the valve metal precursor contains potassium heptafluorotantalate or potassium heptafluoroniobate.

9. Process according to one or more of the preceding claims, wherein the diluent contains alkali metal halides, potassium chloride, potassium fluoride, sodium chloride, a supercritical fluid or mixtures thereof.

10. Process according to one or more of the preceding claims, wherein the dopant contains alkali metal sulphides, sulphones, sulphates, sodium sulphate, potassium sulphate or mixtures thereof.

## Revendications

1. Procédé de fabrication d'un métal redresseur choisi dans le groupe des métaux Ti, Zr, Hf, V, Nb, Ta, Cr, Mo, W et leurs alliages, comprenant la fusion d'un mélange qui contient un précurseur de métal redresseur et un diluant dans un premier récipient ; le transfert du mélange dans au moins un deuxième récipient afin de le mélanger dans des conditions de température et de temps de séjour identiques ou différentes, lors duquel la réaction du précurseur de métal redresseur en un métal redresseur est initiée.

2. Procédé selon la revendication 1, comprenant également le transfert du mélange dans au moins un troisième récipient et le mélange dans des conditions de température et de temps de séjour identiques ou différentes, afin de poursuivre la réaction supplémentaire du précurseur de métal redresseur en un métal redresseur.

3. Procédé selon la revendication 1 ou 2, comprenant également le transfert du mélange dans au moins un quatrième récipient et le mélange dans des conditions de température et de temps de séjour identiques ou différentes, afin de poursuivre la réaction supplémentaire du précurseur de métal redresseur en un métal redresseur.

4. Procédé selon une ou plusieurs des revendications 1 à 3, dans lequel du précurseur de métal redresseur, du diluant ou leur mélange est introduit de manière supplémentaire dans le deuxième récipient ou dans le troisième récipient ou les deux.

5. Procédé selon une ou plusieurs des revendications 1 à 4, dans lequel un réducteur, du diluant ou leur mélange est introduit de manière supplémentaire dans le deuxième récipient ou dans le troisième récipient ou les deux.

6. Procédé selon une ou plusieurs des revendications 1 à 4, dans lequel un dopant est introduit de manière supplémentaire au moins dans le premier et/ou deuxième et/ou troisième récipient.

7. Procédé selon une ou plusieurs des revendications précédentes, dans lequel le réducteur contient au moins un métal alcalin, notamment du sodium.

8. Procédé selon une ou plusieurs des revendications précédentes, dans lequel le précurseur de métal redresseur contient de l'heptafluorotantalate de potassium ou de l'heptafluoroniobate de potassium.

9. Procédé selon une ou plusieurs des revendications précédentes, dans lequel le diluant contient des halogénures alcalins, du chlorure de potassium, du fluorure de potassium, du chlorure de sodium, un fluide supercritique ou leurs mélanges.

10. Procédé selon une ou plusieurs des revendications précédentes, dans lequel le dopant contient des sulfures, sulfones, sulfates de métaux alcalins, du sulfate de sodium, du sulfate de potassium ou leurs mélanges.
